# FASCICULE DE BREVET EUROPEEN

(11) **EP 2 949 243 B1**
(45) Date de publication et mention de la délivrance du brevet: **08.03.2017**
(21) Numéro de dépôt: 15169302.5
(22) Date de dépôt: 27.05.2015
(51) Int. Cl.: A23L 2/04, A23N 1/02, A47J 19/02

(54) **APPAREIL ÉLECTRIQUE DE PRÉPARATION DE JUS PAR PRESSAGE D'ALIMENTS**
ELEKTRISCHES GERÄT ZUR SAFTZUBEREITUNG DURCH PRESSEN VON NAHRUNGSMITTELN
ELECTRICAL APPLIANCE FOR PREPARING JUICE BY PRESSING FOODS

(30) Priorité: 28.05.2014 FR 1454845
(43) Date de publication de la demande: 02.12.2015
(73) Titulaire: SANTOS, 69120 Vaulx en Velin (FR)
(72) Inventeur: Fouquet, Nicolas, 69680 CHASSIEU (FR); Gelin, Cedric, 69190 SAINT FONS (FR)
(74) Mandataire: Lavoix

(56) Documents cités:
- WO-A2-2010/007290
- KR-B1- 101 263 910

## Description

La présente invention concerne un appareil électrique de préparation de jus par pressage d'aliments.

Ce type d'appareil est bien connu : à l'intérieur d'une enceinte de séparation du jus, une vis de pressage, typiquement de forme ogivale, est entraînée en rotation par un moteur électrique ad hoc, dont la sortie mécanique est accouplée à la base de la vis, tandis que des aliments, admis en haut de l'enceinte via une goulotte d'admission vers le bas, sont, sous l'action de la vis, progressivement entraînés vers le bas et pressés contre la face intérieure du bas de l'enceinte. Le jus est collecté aux fins de sa consommation par l'utilisateur, tandis que, de manière séparée, les résidus pressés des aliments sont évacués. L'intérêt de ce type d'appareil est d'obtenir des jus de qualité, en préservant grandement leurs propriétés gustatives et organoleptiques. Des exemples de ce type d'appareil sont fournis, entre autres, dans WO-A-2010/007290.

Une des limitations techniques de ce type d'appareil est la taille maximale des aliments qui peuvent être pressés. En effet, pour que la vis de pressage puisse « attraper » ces aliments et commencer de les entraîner vers le bas pour les presser, il est nécessaire, pour un diamètre de vis donné, que ces aliments soient suffisamment petits, la taille maximale de ces aliments devant typiquement être inférieure au plus grand rayon de la vis de pressage. L'utilisateur est donc très souvent obligé de découper les aliments avant de les admettre dans l'appareil. Par exemple, l'admission d'une pomme entière est impossible.

Pour contourner cette difficulté, WO-A-2010/007290 a, par les modes de réalisation de ses figures 1 à 5, proposé d'agencer, entre la sortie de la goulotte d'admission et une partie basse de pressage de la vis, un organe de fragmentation des aliments, qui consistent en un bord de coupe ou une lame tranchante et qui est porté par une partie haute de la vis : de par la rotation de la vis, ce bord de coupe ou cette lame balaye la sortie de la goulotte, si bien que les aliments sortant de la goulotte sont découpés en deux tranches. La mise en oeuvre d'un tel découpage des aliments pose cependant des difficultés pratiques. En effet, pour couper efficacement un aliment, en particulier de forme proche d'une sphère et/ou ayant une certaine dureté superficielle, tel qu'une pomme, il est nécessaire de maintenir en position l'aliment lorsque le bord de coupe ou la lame tranchante est appliqué sur cet aliment : dans WO-A-2010/007290, ce maintien en position est réalisé par un organe de blocage en rotation, prévu dans la goulotte, ainsi que par un poussoir que l'utilisateur doit enfoncer dans la goulotte et maintenir appuyé contre l'aliment afin d'éviter qu'il ne remonte dans la goulotte lors de l'application du bord de découpe ou de la lame tranchante sur l'aliment. Cet organe de blocage et ce poussoir, indispensables au fonctionnement de l'appareil de WO-A-2010/007290, sont contraignants d'utilisation. De plus, du fait même que l'aliment est fragmenté en deux tranches découpées de manière nette, la plus grosse de ces deux tranches risque d'avoir une dimension toujours trop grande, pour être « attrapée » par la vis de pressage, avec l'inconvénient potentiel de rester coincée en haut de la vis, en particulier lorsque l'aliment est de forme proche d'une sphère et/ou a une certaine dureté superficielle, tel qu'une pomme.

Le but de la présente invention est de proposer un appareil du type décrit plus haut, dont la fragmentation des aliments avant leur pressage est améliorée, en étant notamment plus efficace, ainsi que moins contraignante pour l'utilisateur.

A cet effet, l'invention a pour objet un appareil électrique de préparation de jus par pressage d'aliments, tel que défini à la revendication 1.

Une des idées à la base de l'invention est d'aménager la partie haute de l'enceinte de réception de la vis de pressage, pour maintenir en place les « gros » aliments lorsque ceux-ci se retrouvent au contact des moyens de balayage destinés à les fragmenter. A cet effet, l'invention prévoit que la sphère inscrite définie par la goulotte d'admission, qui, géométriquement, correspond sensiblement au plus gros aliment pseudo-sphérique admissible dans la goulotte, est déplaçable, depuis la goulotte, sans blocage à l'intérieur de la partie haute de l'enceinte, jusqu'à une position dite de fragmentation, dans laquelle, sans intervention de l'utilisateur, des moyens de blocage spécifiques, portés par la face intérieure de la partie haute de l'enceinte, maintiennent en position cette sphère inscrite, pendant que des moyens de balayage, portés par la partie haute de la vis, peuvent appliquer à cette sphère inscrite une contrainte d'écrasement. Les moyens de blocage sont conçus, à la fois, pour empêcher la sphère inscrite de rouler contre la face intérieure de la partie haute de l'enceinte dans le sens de la rotation de la vis, en formant, en quelque sorte, une butée d'anti-roulement pour la sphère inscrite, et pour empêcher la sphère inscrite de rouler en sens opposé, en formant, en quelque sorte, une butée d'anti-échappement pour cette sphère inscrite. La sphère inscrite étant ainsi fermement maintenue en position par les moyens de blocage, qui agissent sur une portion de la sphère inscrite correspondant sensiblement à sa moitié verticale tournée à l'opposé de la vis, l'invention prévoit que les moyens de balayage peuvent agir efficacement sur le reste de la sphère inscrite, correspondant sensiblement à son autre moitié verticale, en l'écrasant. Ainsi, lorsque l'utilisateur introduit dans la goulotte un gros aliment, c'est-à-dire un aliment dont la forme est proche de celle de la sphère inscrite précitée, cet aliment se déplace sans blocage, notamment sous l'effet de son propre poids, dans la goulotte puis dans la partie haute de l'enceinte, jusqu'à occuper la position de fragmentation, dans laquelle il est écrasé jusqu'à rupture par cisaillement dans un plan sensiblement vertical et médian de l'aliment. Bien entendu, de par la nature même de l'aliment, la rupture de ce dernier, résultant de son écrasement, conduit à la formation de deux ou davantage de fragments d'aliment, de petites tailles et ayant des formes irrégulières, qui sont facilement et rapidement « attrapés » par la partie basse de la vis aux fins de leur pressage. Grâce à l'invention, pour un diamètre de vis de pressage donné, des aliments de grande taille, tels que des pommes entières, peuvent être admis dans l'appareil en vue de leur pressage, cette admission pouvant avantageusement être réalisée dans l'axe de la vis, moyennant le centrage, sur cet axe, d'au moins la sortie de la goulotte, voire de toute la goulotte, pour permettre alors un dimensionnement diamétral maximal pour la sphère inscrite précitée.

Des caractéristiques additionnelles avantageuses de l'appareil conforme à l'invention, prises isolément ou selon toutes les combinaisons techniquement possibles, sont spécifiées aux revendications dépendantes.

L'invention sera mieux comprise à la lecture de la description qui va suivre, donnée uniquement à titre d'exemple et faite en se référant aux dessins sur lesquels :
- la figure 1 est une vue en perspective d'un appareil conforme à l'invention ;
- la figure 2 est une vue en élévation de l'appareil de la figure 1 ;
- les figures 3 et 4 sont des sections selon les lignes respectives III-III et IV-IV de la figure 2 ;
- la figure 5 est une coupe selon la ligne III-III de la figure 2, montrant un seul des composants de l'appareil ;
- la figure 6 est une vue en élévation montrant un seul autre composant de l'appareil ;
- les figures 7 à 9 sont une vue en perspective de l'appareil, avec coupe partielle, ces trois vues illustrant respectivement trois positions différentes d'une sphère admise dans l'appareil ;
- la figure 10 est une vue analogue à la figure 3, considérée avec la sphère de la figure 9 ;
- la figure 11 est une vue en élévation du composant montré à la figure 6, considéré avec la sphère de la figure 9 ; et
- les figures 12 et 13 sont des vues similaires à la figure 10, illustrant de manière schématique respectivement deux temps successifs de fragmentation d'un aliment dans l'appareil.

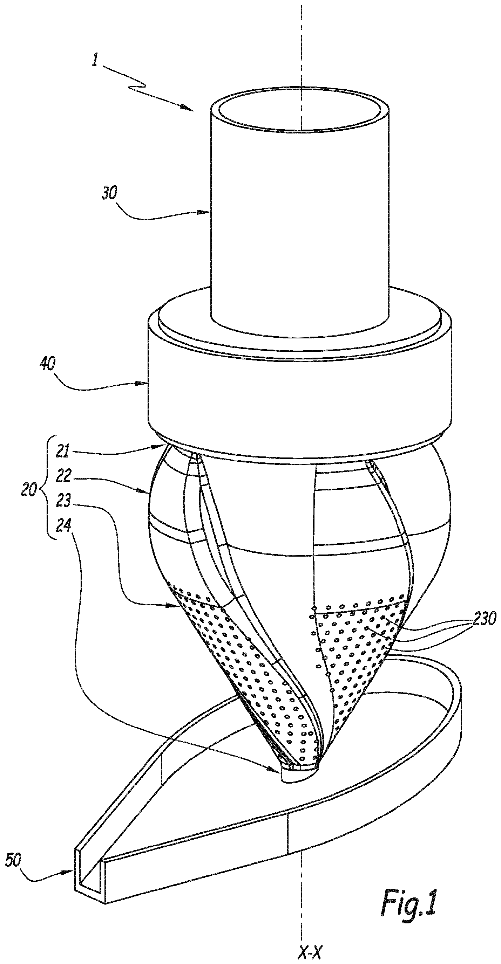

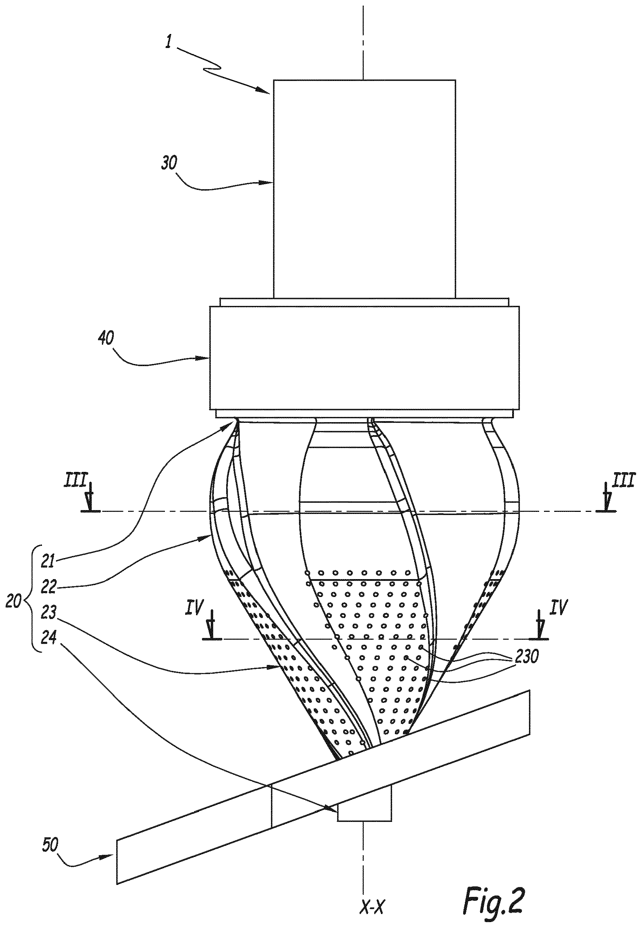

Sur les figures 1 à 13 est représenté un appareil 1 permettant de préparer des jus à partir d'aliments, notamment des fruits et des légumes, par pressage de ces aliments.

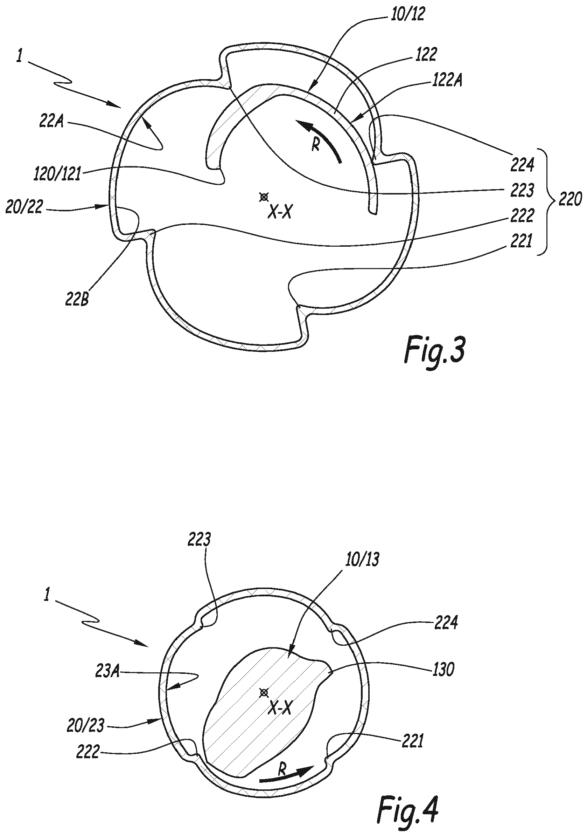

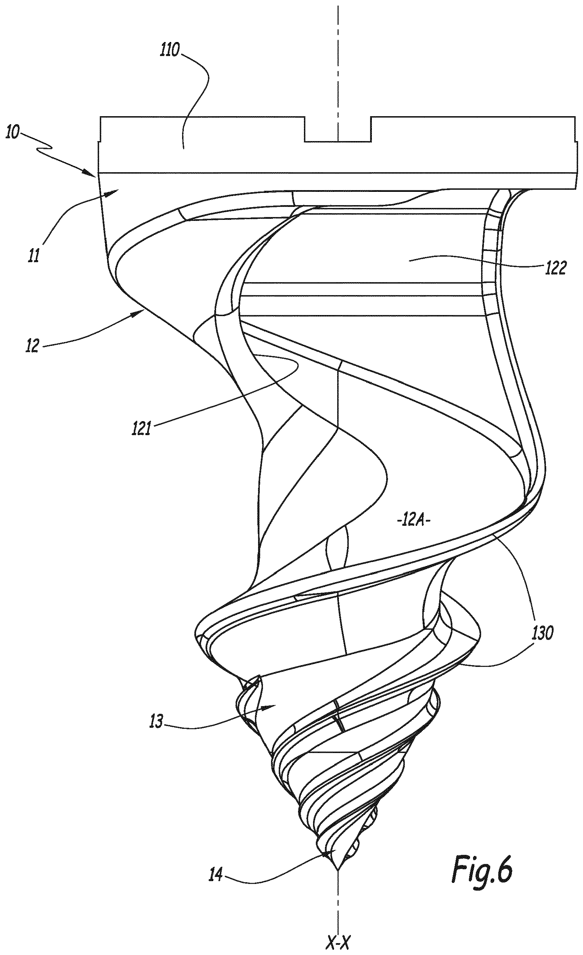

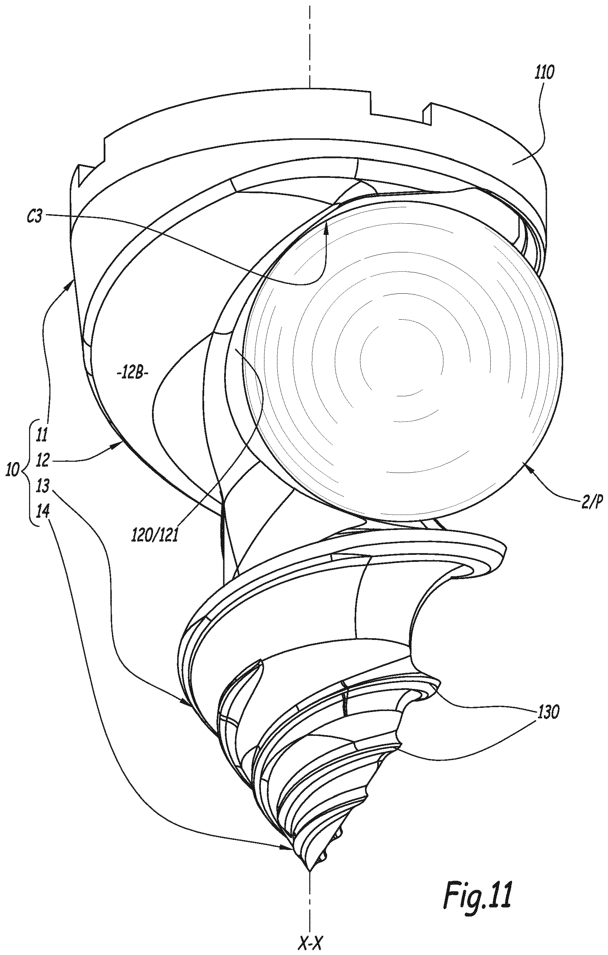

L'appareil 1 comprend une vis 10 de traitement des aliments, en particulier de pressage de ces aliments, qui est montrée seule sur les figures 6 et 11 et qui est visible, au sein de l'appareil 1, sur les figures 3, 4, 7 à 10, 12 et 13. Cette vis 10 définit un axe central X-X autour duquel la vis est, au sein de l'appareil 1, entraînable en rotation sur elle-même et ce dans un sens de rotation prédéterminé, comme indiqué par la flèche R sur les figures. En pratique, lorsque l'appareil 1 est utilisé, l'appareil repose sur une table ou, plus généralement, un plan de travail sensiblement horizontal, de sorte que l'axe X-X est vertical ou sensiblement vertical : dans ces conditions, par commodité, le présent document est orienté par rapport à l'axe X-X, les termes « haut » et « supérieur » correspondant à une direction qui, dans l'axe X-X, est tournée vers le haut, c'est-à-dire à l'opposé du plan de travail sur lequel repose l'appareil 1. Les termes « inférieur » et « bas » correspondent à une direction axiale de sens opposé.

Dans la forme de réalisation considérée sur les figures, la vis 10 inclut, de manière successive dans la direction de l'axe X-X, à la fois :
- une extrémité haute 11, qui présente une forme globale d'anneau, centrée sur l'axe X-X et courant de manière ininterrompue tout autour de cet axe X-X,
- une partie haute 12, qui présente une forme globale d'hélice, s'enroulant sensiblement autour de l'axe X-X et s'étendant vers le bas depuis l'extrémité haute 11,
- une partie basse 13, qui présente une forme globalement tronconique, centrée sur l'axe X-X et convergente vers le bas, et
- une extrémité basse 14, qui présente une forme globale de pointe de cône, centrée sur l'axe X-X et inscrite dans le prolongement vers le bas de la partie basse 13.

D'autres caractéristiques de la vis 10 et de ses parties 11 à 14 seront décrites plus loin, en lien avec d'autres composants de l'appareil 1.

L'appareil 1 comporte en outre une enceinte 20 à l'intérieur de laquelle la vis 10 est reçue de manière à pouvoir être entrainée en rotation sur elle-même autour de l'axe X-X par rapport à cette enceinte 20. En pratique, l'enceinte 20 est fixe par rapport au plan de travail sur lequel repose l'appareil 1 lorsque ce dernier est utilisé. D'ailleurs, de manière non représentée en détail sur les figures, cette enceinte 20 est, au sein de l'appareil 1, potentiellement solidaire d'un bâti externe de cet appareil, cet aspect n'étant pas limitatif de la présente invention.

L'enceinte 20 est centrée sur l'axe X-X, dans le sens où elle délimite un volume interne, qui, comme bien visible sur les figures 3, 4 et 7, reçoit intérieurement la vis 10 de manière sensiblement coaxiale.

Dans la forme de réalisation considérée sur les figures, l'enceinte 20 comporte, successivement dans la direction de l'axe X-X, à la fois :
- une extrémité haute 21, qui entoure l'extrémité haute 11 de la vis 10, en courant tout autour de l'extérieur de cette extrémité 11 de la vis et en s'étendant axialement en regard radial de cette extrémité 11 de la vis, et qui reçoit l'extrémité 11 de la vis 10 de manière sensiblement complémentaire, en centrant ainsi l'enceinte 20 sur l'axe X-X,
- une partie haute 22, qui entoure la partie haute 12 de la vis 10, en courant tout autour de l'extérieur de cette partie 12 de la vis et en s'étendant axialement en regard radial de cette partie 12 de la vis, et dont l'essentiel de la face intérieure 22A est distant radialement de la partie haute 12 de la vis 10,
- une partie basse 23, qui entoure la partie basse 13 de la vis 10, en courant tout autour de l'extérieur de cette partie 13 de la vis et qui s'étend axialement en regard radial de cette partie 13 de la vis, et qui est intérieurement complémentaire de la partie basse 13 de la vis 10, en présentant ainsi une face intérieure 23A qui est conique, centrée sur l'axe X-X et convergente vers le bas, et
- une extrémité basse 24, qui entoure l'extrémité basse 14 de la vis 10, en courant tout autour de l'extérieur de cette extrémité 14 de la vis et en s'étendant axialement au moins en regard radial de cette extrémité 14 de la vis, voire, comme ici, plus bas que cette extrémité 14 de la vis, et qui présente une forme globalement tubulaire, centrée sur l'axe X-X et ouverte à ses deux extrémités axiales opposées.

D'autres caractéristiques de l'enceinte 20 et de ses parties 21 à 24 seront décrites plus loin, en lien avec le reste de l'appareil 1.

L'appareil 1 comporte également une goulotte 30 par laquelle sont admis des aliments qui sont à traiter à l'intérieur de l'enceinte 20 par la vis 10.

Dans l'exemple de réalisation considéré ici, la goulotte 30 présente une forme globalement tubulaire, centrée sur l'axe X-X. En pratique, d'autres formes de réalisation sont envisageables pour la goulotte 30, du moment que le débouché vers le bas de cette goulotte soit relié à la partie haute 22 de l'enceinte 20 afin que les aliments introduits dans la goulotte atteignent cette partie haute de l'enceinte.

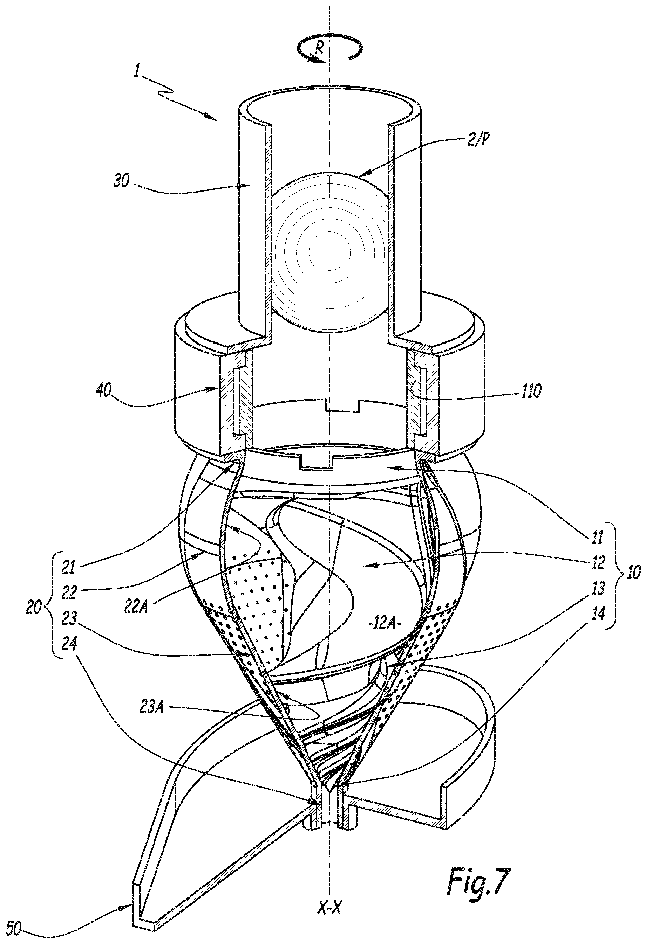

Dans tous les cas, la goulotte 30 définit géométriquement une sphère inscrite 2, qui est dessinée sur les figures 7 à 11 et qui est la sphère la plus grande qui peut être introduite dans la goulotte 30 et atteindre la sortie de celle-ci sans être bloquée dans la goulotte. En d'autres termes, comme bien visible sur la figure 7, la sphère inscrite 2 est un objet géométrique tridimensionnel fictif, consistant en la « boule la plus grosse » qui peut atteindre sans blocage, c'est-à-dire sans interférence d'arrêt complet du mouvement, la sortie de la goulotte 30 depuis l'extérieur de l'appareil 1 via l'intérieur de la goulotte. On comprend que cette sphère inscrite 2 simule le plus gros aliment sphérique qui peut être admis entier dans l'appareil 1 en vue d'en obtenir le jus. A titre d'exemple non limitatif, le diamètre intérieur de la goulotte 30 vaut 80 mm environ, ce qui revient à dire que la sphère inscrite 2 présente un diamètre de même valeur.

En pratique, la goulotte 30 est fixe au sein de l'appareil 1, en étant solidarisée, directement ou indirectement, à l'enceinte 20, le débouché vers le bas de la goulotte 30 surplombant la vis 10. Dans l'exemple de réalisation considéré sur les figures, l'extrémité basse de la goulotte 30 est solidarisée à l'extrémité haute 21 de l'enceinte 20 par l'intermédiaire d'une pièce d'assemblage fixe 40 qui appartient par exemple au bâti précité de l'appareil 1. A titre de variante non représentée, la pièce 40 est réalisée sous la forme d'un prolongement vers le haut de l'extrémité haute 21 de l'enceinte 20 et/ou d'un prolongement vers le bas de l'extrémité basse de la goulotte 30.

Au niveau axial de la région de raccordement entre l'enceinte 20 et la goulotte 30, ici à l'intérieur de la pièce d'assemblage 40, l'extrémité haute 11 de la vis 10 est pourvue de moyens 110 de liaison à un moteur électrique, non représenté, d'entrainement de la vis 10 en rotation autour de l'axe X-X, ce moteur électrique étant par exemple logé dans le bâti précité de l'appareil 1. Sur les figures, les moyens de liaison 110 ne sont indiqués que de manière schématique. En pratique, ces moyens de liaison 110 peuvent présenter des formes très diverses, du moment que ces moyens de liaison assurent au moins une partie de l'accouplement entre le moteur électrique précité et l'extrémité haute 11 de la vis 10 de manière à entrainer cette vis en rotation sur elle-même autour de l'axe X-X. A titre d'exemple non limitatif, ces moyens de liaison 110 sont mécaniques et consistent en une couronne, un engrenage, un tambour, etc, plus généralement une pièce tournante, centrée sur l'axe X-X et entrainée en rotation sur elle-même par un câble, une courroie, etc, ceinturant extérieurement cette pièce tournante et mis en mouvement par le moteur électrique précité.

Dans tous les cas, on comprend que, en service, les moyens de liaison 110 sont liés en rotation à l'extrémité haute 11 de la vis 10, en étant solidarisés à cette extrémité haute de la vis par tout moyen approprié, avantageusement de manière amovible pour permettre, lorsque l'appareil 1 n'est pas en service, le démontage entre les moyens de liaison 110 et la vis 10 et ainsi faciliter leur nettoyage.

Quelle que soit la forme de réalisation des moyens de liaison 110, on notera que leur présence à l'extrémité haute 11 de la vis 10 rigidifie substantiellement cette extrémité 11 de la vis, ce qui revient à dire que ces moyens de liaison 110 fixent fermement en position l'axe X-X au sein de l'appareil 1, en reprenant les efforts radiaux appliqués à la vis 10 lors de sa rotation, en particulier appliqués à son extrémité haute 11 et sa partie haute 12, sans que ces efforts radiaux ne soient repris, tout du moins substantiellement, à l'interface de centrage entre l'extrémité haute 11 de la vis 10 et l'extrémité haute 21 de l'enceinte 20. On comprend d'ailleurs que cet aspect d'entrainement de la vis 10 par son extrémité haute 11, avantageusement conformée en anneau, constitue une spécificité intéressante qui est indépendante des considérations techniques relatives au reste de cette vis de pressage.

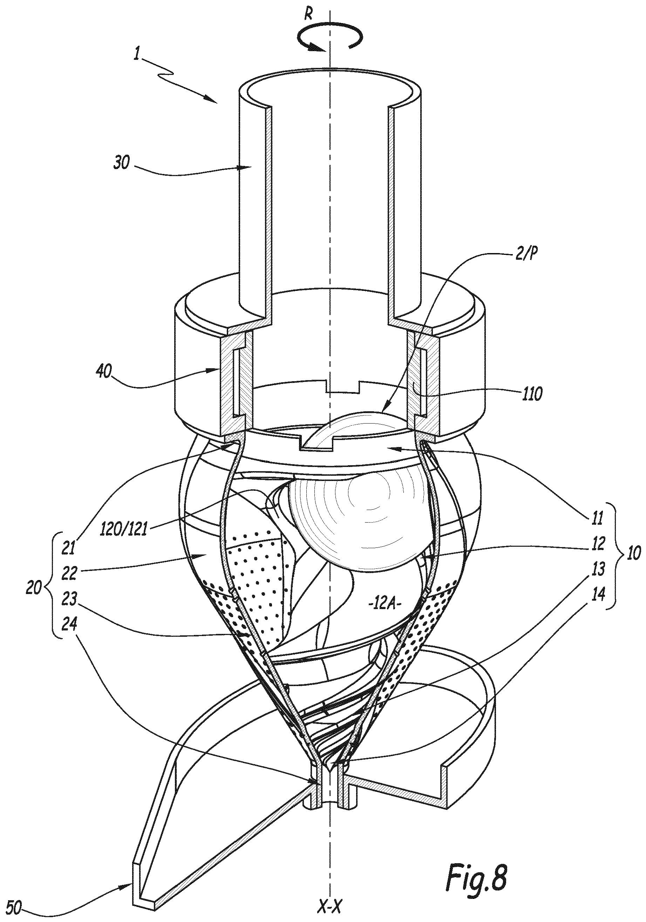

Eu égard à la présence des moyens de liaison 110 à l'extrémité haute 11 de la vis, le débouché vers le bas de la goulotte 30 est relié au volume intérieur de la partie haute 22 de l'enceinte 20 par l'intérieur de l'anneau formé par l'extrémité haute 11. Ainsi, les aliments sortant de la goulotte 30 rejoignent, via l'extrémité haute 11 de la vis 10, entourée par l'extrémité haute 21 de l'enceinte 20, la partie haute 22 de l'enceinte 20 pour y être traités par la partie haute 12 de la vis 10. Le diamètre intérieur de l'anneau formé par l'extrémité haute 11 de la vis 10 est au moins égal, voire légèrement supérieur au diamètre de la sphère inscrite 2 de sorte que cette sphère passe librement, c'est-à-dire sans interférence de blocage, de la sortie de la goulotte 30 à l'intérieur de la partie haute 22 de l'enceinte 20, via l'intérieur de l'extrémité haute 11 de la vis, comme montré à la figure 8.

Au niveau axial des parties hautes 12 et 22 de la vis 10 et de l'enceinte 20, il est prévu de traiter les aliments en vue de leur pressage subséquent au niveau des parties basses 13 et 23 de la vis et de l'enceinte.

A cet effet, dans la forme de réalisation considérée sur les figures, la partie haute 12 de la vis 10 délimite une surface 12A tournée vers le haut, pour guider les aliments depuis l'intérieur de l'extrémité haute 11 de la vis jusqu'à l'extérieur de la partie basse 13 de la vis : comme bien visible sur la figure 6, cette surface de guidage 12A est hélicoïdale, en s'enroulant sensiblement autour de l'axe X-X et en reliant la face intérieure de l'anneau formé par l'extrémité haute 11 à la face extérieure du plus grand diamètre de la partie basse conique 13. Comme montré sur les figues 8, 9 et 11, la surface de guidage 12A est prévue, en particulier de par son inclinaison, pour laisser la sphère inscrite 2 déplaçable vers le bas depuis l'intérieur de l'extrémité haute 11 de la vis, et ce suivant une trajectoire globale sensiblement hélicoïdale résultant du roulement et/ou du glissement fictifs de cette sphère 2 sur la surface de guidage 12A à l'intérieur de la partie haute 22 de l'enceinte 20.

De plus, la partie haute 12 de la vis 10 est pourvue de moyens 120 de balayage de la sortie de la goulotte 30, conçus pour, à l'intérieur de la partie haute 22 de l'enceinte, fragmenter les aliments sortant de la goulotte 30, avant que les fragments d'aliment rejoignent la partie basse 23 de l'enceinte 20 pour y être pressés par la partie basse 13 de la vis 10. Dans l'exemple de réalisation considéré sur les figures, les moyens de balayage 120 consistent en une arête 121 d'écrasage des aliments, délimitée par la partie haute 12 de la vis 10. Cette arête d'écrasage 121 s'étend vers le bas depuis l'anneau formé par l'extrémité haute 11 de la vis 10, en étant tournée vers l'axe X-X et en s'enroulant en hélice autour de cet axe, jusqu'à la partie basse 13 de la vis 10 comme bien visible sur les figures 6 et 7. Pour des raisons qui apparaîtront plus loin, l'arête d'écrasage121 n'a pas à être tranchante ou coupante, dans le sens où, lorsqu'elle agit sur les aliments pour les fragmenter, elle n'est pas conçue pour les trancher par division nette de la matière de l'aliment de part et d'autre de l'arête, mais cette arête 121 est conçue, de par sa forme, pour écraser l'aliment jusqu'à rupture de la matière de ce dernier par déchirement et/ou arrachage.

Afin que l'action des moyens de balayage 120 sur les aliments soit préformante en vue de leur fragmentation, la partie haute 22 de l'enceinte 20 est intérieurement pourvue de moyens de blocage 220 qui bloquent en rotation les aliments lorsque ces derniers sont au contact des moyens de balayage 120. Dans l'exemple de réalisation considéré sur les figures, ces moyens de blocage 220 consistent en quatre nervures 221, 222, 223 et 224 qui, comme bien visible sur les figures 3 et 4, sont individuellement identiques les unes aux autres, sont réparties de manière régulière autour de l'axe X-X et s'étendent chacune en saillie vers l'axe X-X depuis la face intérieure 22A de la partie haute 22 de l'enceinte 20. Ces nervures 221 à 224 constituent les portions de la face intérieure 22A de la partie haute 22 de l'enceinte 20, qui sont les plus proches radialement de l'axe X-X.

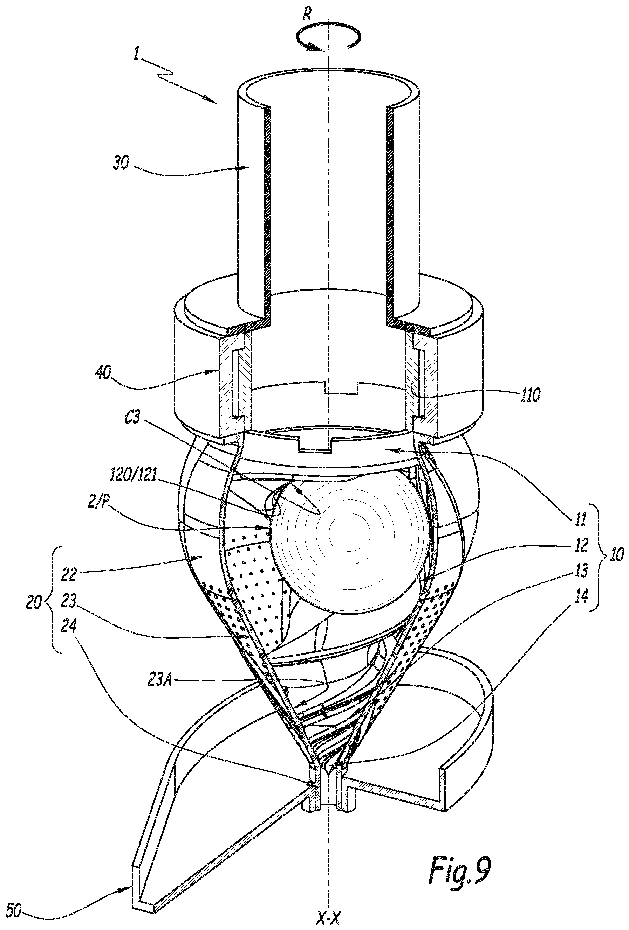

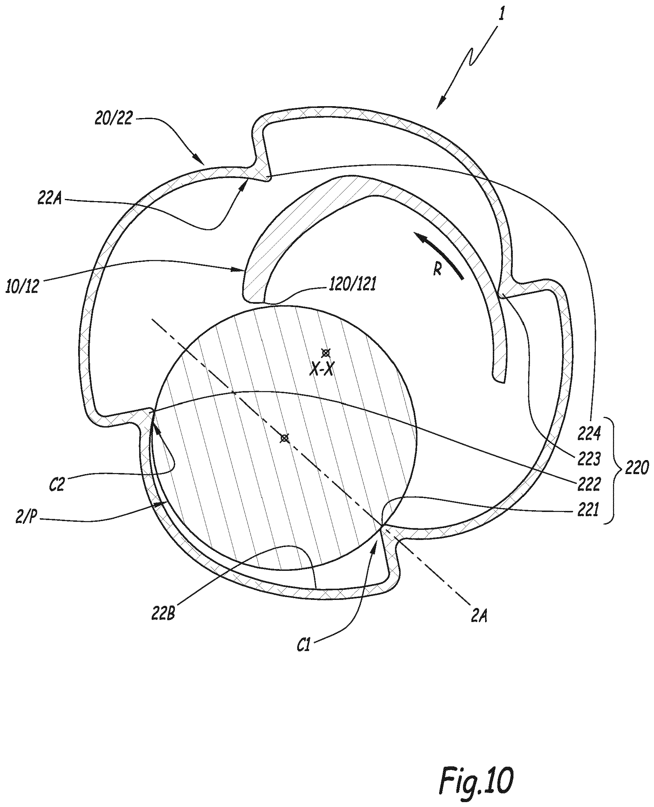

L'arête d'écrasage 121 et les nervures 221 à 224, plus généralement les moyens de balayage 120 et les moyens de blocage 220, sont agencés et dimensionnés en lien avec la sphère inscrite 2, dans le sens où, à l'intérieur de la partie haute 22 de l'enceinte 20, cette sphère inscrite 2 est déplaçable jusqu'à une position de fragmentation, imposée à la sphère inscrite par ces moyens de balayage 120 et ces moyens de blocage 220, ce déplacement de la sphère inscrite 2 jusqu'à cette position de fragmentation étant avantageusement guidé à l'intérieur de la partie haute 22 de l'enceinte 20 par la surface de guidage 12A comme indiqué précédemment. Plus précisément, lorsque la sphère inscrite 2 occupe la position de fragmentation précitée, qui est représentée sur les figures 9 à 11, plusieurs zones de contact sont formées entre, d'une part, la sphère inscrite et, d'autre part, les moyens de balayage 120 et les moyens de blocage 220, à savoir :
- une première zone C1 de contact entre la sphère inscrite 2 et une première des nervures 221 à 224, en l'occurrence la nervure 221 sur la figure 10, de sorte que, en agissant sur la sphère inscrite par cette zone de contact C1, la nervure 221 s'oppose au roulement de la sphère inscrite dans le sens de la rotation R de la vis 10 contre la face intérieure 22A de la partie haute 22 de l'enceinte 20,
- une deuxième zone C2 de contact entre la sphère inscrite 2 et une deuxième nervure qui précède immédiatement la première nervure précitée dans le sens de la rotation R de la vis 10, en l'occurrence la nervure 222 sur la figure 10, de sorte que, en agissant sur la sphère inscrite par cette deuxième zone de contact C2, cette deuxième nervure s'oppose au roulement de la sphère inscrite dans le sens opposé à la rotation R de la vis contre la face intérieure 22A de la partie haute 22 de l'enceinte 20, la deuxième zone de contact C2 étant formée dans la moitié de la sphère inscrite, qui est tournée à l'opposé de l'axe X-X et qui est délimitée par un plan diamétral, noté 2A sur la figure 10, de la sphère inscrite, à la fois parallèle à l'axe X-X et passant par la première zone de contact C1, et
- une troisième zone C3 de contact entre la sphère inscrite 2 et l'arête d'écrasage 121 de la vis 10, de sorte que, en agissant sur la sphère inscrite par cette troisième zone de contact C3 lors de la rotation de la vis, l'arête d'écrasage 121 écrase la sphère inscrite dans le sens de la rotation R de la vis, cette zone de contact C3 étant formée dans la moitié de la sphère inscrite, opposée à celle dans laquelle est formée la deuxième zone de contact C2.

Dans la forme de réalisation considérée sur les figures, on notera que, dans le plan de coupe de la figure 10, les zones de contact C1 et C2 sont indiqués, alors que la troisième zone de contact C3 n'est pas visible : cela résulte du fait que les première et deuxième zones de contact C1 et C2 sont situées sensiblement à un même niveau axial, à savoir celui du plan de coupe de la figure 10, tandis que la zone de contact C3 est située à un niveau axial différent, en l'occurrence plus haut que le niveau axial du plan de coupe de la figure 10.

Qu'elles soient à des niveaux axiaux différents ou non, les trois zones de contact C1, C2 et C3 permettent, lors de la rotation de la vis 10, d'appliquer à la sphère inscrite 2 des contraintes de cisaillement sensiblement dans son plan diamétral 2A : au niveau de la zone de contact C1, la nervure 221 forme une butée d'anti-roulement dans le sens de la rotation R pour la sphère inscrite 2, si bien que, au niveau de la zone de contact C3, l'arête d'écrasage 121 est en mesure d'appuyer sur la moitié, tournée vers l'axe X-X, de la sphère 2 en dehors du plan diamétral 2A de cette dernière, tout en empêchant la sphère inscrite d'échapper à l'action de l'arête d'écrasage 121 en s'éloignant de l'axe X-X et/ou en remontant vers le haut, en raison de son blocage, au niveau de la zone de contact C2, par la nervure 222 qui forme ainsi une butée d'anti-échappement pour la sphère inscrite.

Bien entendu, on comprend que la configuration de fragmentation, qui vient d'être décrite en lien avec les figures 9 à 11, ne constitue que l'une des quatre positions de fragmentation possibles à l'intérieur de la partie haute 22 de l'enceinte 20, réparties de manière régulière autour de l'axe X-X, en lien avec la répartition des quatre nervures 221 à 224 autour de cet axe.

Par ailleurs, du fait que les nervures 221 à 224 constituent les portions de la face intérieure 22A de la partie haute 22 de l'enceinte 20 les plus proches radialement de l'axe X-X, une option avantageuse consiste à ce que, comme bien visible sur les figures 3 et 6, la partie haute 12 de la vis 10 inclut, dans sa périphérie extérieure, une paroi 122, qui présente une forme globale de demi-tube, centrée sur l'axe X-X, qui borde la périphérie extérieure de la surface de guidage 12A et dont la face extérieure 122A est dimensionnée pour être sensiblement tangente aux nervures 221 à 224, avec interposition d'un jeu fonctionnel pour ne pas induire d'usure : cet agencement entre les nervures 221 à 224 et la partie haute 12 de la vis 10 induit un effet de raclage de la face 122A pour éviter l'accumulation de résidus d'aliment .

Suivant une forme de réalisation avantageuse, la face intérieure 22A de la partie haute 22 de l'enceinte 20 est constituée, en dehors de ses portions occupées par les nervures 221 à 224, ainsi qu'en dehors de sa zone de raccordement avec l'extrémité haute 21 de l'enceinte et de sa zone de raccordement avec la partie basse 23 de l'enceinte, d'une surface concave 22B, depuis laquelle les nervures 221 à 224 sont saillantes et qui est torique de manière centrée sur l'axe X-X : la conformation torique de cette surface concave 22B permet, dans sa partie la plus profonde, d'accentuer l'étendue saillante des nervures 221 à 224 et donc de renforcer leur effet de blocage des aliments, tout en conférant à la face intérieure de l'enceinte 20 un profil non anguleux au moins sur la hauteur axiale de sa partie haute 22.

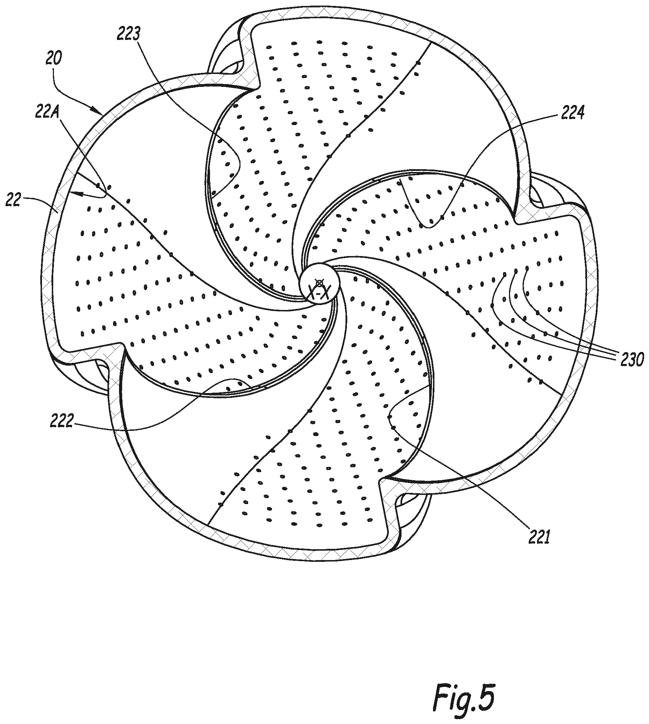

Egalement à titre d'option avantageuse, chacune des nervures 221 à 224 est conformée en une portion d'hélice centrée sur l'axe X-X, qui est enroulée vers le bas dans le sens de la rotation de la vis 10, comme bien visible sur la figure 5 : de cette façon, en plus de leur fonction de blocage des aliments, les nervures 221 à 224 ont une fonction de guidage des aliments vers le bas contre la face intérieure 22A de la partie haute 22 de l'enceinte 20.

En ce qui concerne les parties basses, coniques et complémentaires, 13 et 23 de la vis 10 et de l'enceinte 20, on notera que la partie basse 13 de la vis est extérieurement pourvue de filets 130, qui s'enroulent vers le bas depuis la surface de guidage 12A de la partie haute 12 de la vis 10, plus généralement depuis la zone de raccordement entre cette surface de guidage 12A et la face extérieure de la vis, jusqu'à l'extrémité basse 14 de la vis, avantageusement en se prolongeant sur la face extérieure de cette extrémité basse 14. Ces filets 130 sont conçus pour, lors de la rotation R de la vis 10, entraîner vers le bas, à l'intérieur de la partie basse 23 de l'enceinte 20, les fragments d'aliment qui proviennent de la partie haute 22 de l'enceinte et qui entrent dans la partie basse 23 de l'enceinte, via un passage qui, vers le haut, est délimité par l'arête d'écrasage 121 et qui, vers le bas, est délimité par la surface de guidage 12A, plus généralement par la zone de raccordement entre cette surface de guidage 12A et la face extérieure de la vis. Dans leur partie haute, les filets 130 « attrapent » les fragments d'aliment venant de franchir le passage précité, cet attrapage étant facilité en prévoyant, à titre d'options avantageuses, visibles sur les figures 6 et 11, que :
- au moins en région inférieure, la partie haute 12 de la vis délimite une surface hélicoïdale 12B tournée vers le bas, pour, lors de la rotation R de la vis, pousser les fragments d'aliment vers le bas, et/ou
- au moins un des filets 130 se prolonge vers le haut sur la face extérieure de la partie haute 12 de la vis.

Après avoir attrapé les fragments d'aliment, les filets 130 sont conçus, toujours lorsque la vis 10 est entraînée en rotation autour de l'axe X-X, pour presser ces fragments d'aliment contre la face intérieure 23A de la partie basse 23 de l'enceinte 20, au fur et à mesure que ces fragments d'aliment sont entraînés vers le bas à l'intérieur de la partie basse 23 de l'enceinte, plus précisément entre la face intérieure 23A de cette partie basse 23 et la face extérieure de la partie basse 13 de la vis.

La partie basse 23 de l'enceinte 20 est pourvue d'orifices traversants 230 de tamisage des aliments, par lesquels le jus résultant du pressage des fragments d'aliment passe de l'intérieur à l'extérieur de la partie basse 23 de l'enceinte 20. Plus généralement, on comprend que la partie basse 23 de l'enceinte 20 est conçue pour séparer le jus des fragments d'aliment lorsque ces derniers sont pressés par la partie basse 13 de la vis 10, ce jus passant à l'extérieur de la partie basse 23 de l'enceinte 20, tandis que les résidus d'aliment pressés restent à l'intérieur de cette partie basse 23 de l'enceinte.

Les formes complémentaires coniques de la partie basse 13 de la vis 10 et de la partie basse 23 de l'enceinte 20 rendent, d'une part, concentriques les efforts radiaux appliqués à la partie basse 13 de la vis lors du pressage d'aliment par cette vis entraînée en rotation, la somme de ces efforts radiaux étant sensiblement nulle, ce qui limite toute tendance de désaxage de la vis à l'intérieur de l'enceinte 20, et, d'autre part, renforcent la résistance mécanique de la partie basse 23 de l'enceinte 20 vis-à-vis des efforts radiaux appliqués à cette partie basse, en répartissant en partie les contraintes correspondantes vers le haut et vers le bas, ce qui évite des surcontraintes locales.

Dans le prolongement des considérations qui précèdent, une forme de réalisation avantageuse consiste à réaliser la partie basse 23 de l'enceinte 20 d'une seule pièce en métal, typiquement en une tôle perforée des orifices 230. Ceci étant, en variante, la partie basse 23 de l'enceinte peut être réalisée en plusieurs pièces, en métal ou en une autre matière.

A titre d'option avantageuse, permettant notamment d'améliorer le pressage des fragments d'aliment, les nervures 221 à 224 de la partie haute 22 de l'enceinte 20 se prolongent dans la partie basse 23 de l'enceinte : comme bien visible sur la figure 4, ces prolongements vers le bas des nervures 221 à 224 permettent, dans la partie basse 23 de l'enceinte 20, de bloquer en rotation les fragments d'aliment lorsque ces derniers sont entraînés par les filets 130 de la partie basse 13 de la vis 10.

Au niveau axial de l'extrémité basse 24 de l'enceinte 20, l'intérieur de cette extrémité 24 de l'enceinte canalise, vers le bas et de manière centrée sur l'axe X-X, les résidus d'aliment pressés provenant de l'intérieur de la partie basse 23 de l'enceinte, l'entraînement vers le bas de ces résidus étant avantageusement renforcé par la pointe de cône formant l'extrémité basse 14 de la vis 10 lorsque cette dernière est entraînée en rotation autour de l'axe X-X. Autrement dit, l'extrémité basse 24 de l'enceinte 20 constitue une sortie d'évacuation des résidus de pressage à l'extérieur de l'enceinte 20. Cette évacuation des résidus s'effectuant dans l'axe X-X, elle s'avère particulièrement efficace, en particulier sans induire de résistance à l'écoulement des résidus depuis la partie basse 23 de l'enceinte 20, pour sortir de cette enceinte.

Dans le prolongement des considérations qui précèdent, on remarquera que cette sortie d'évacuation, formée par l'extrémité basse 24 de l'enceinte 20, n'interfère intérieurement avec aucun des aménagements de l'appareil 1 qui permettent d'entraîner la vis 10 en rotation : en effet, comme expliqué plus haut, la vis 10 est entraînée en rotation par l'intermédiaire des moyens de liaison 110 prévus à l'extrémité haute 11 de la vis 10, tandis que la pointe de cône formant l'extrémité basse 14 de la vis est libre et reçue sans contact à l'intérieur de la sortie d'évacuation formée par l'extrémité 24 de l'enceinte 20.

A titre d'option, non représentée sur les figures, la sortie d'évacuation que forme l'extrémité basse 24 de l'enceinte 20 est munie de moyens, connus en soi, permettant de régler la résistance à l'écoulement des résidus de pressage à travers cette sortie d'évacuation : à titre d'exemple, de tels moyens de réglage comprennent un diaphragme d'obturation partielle de la section d'écoulement à travers la sortie d'évacuation, l'étendue d'action de ce diaphragme étant réglable, ou bien ces moyens de réglage comprennent un clapet de fermeture partielle du débouché vers le bas de la sortie d'évacuation, la position de ce clapet étant réglable au moyen d'un mécanisme asservi.

Extérieurement, l'extrémité basse 24 de l'enceinte 20 est ceinturée par un bac récupérateur ou, plus généralement, par des moyens 50 de collecte du jus provenant de l'extérieur de la partie basse 23 de l'enceinte 20.

Un exemple d'utilisation de l'appareil 1 va maintenant être décrit, et ce plus spécifiquement en regard des figures 7 à 12 en considérant qu'on introduit dans l'appareil 1 une pomme entière P dont la forme et les dimensions sont sensiblement identiques à celles de la sphère inscrite 2 considérée plus haut.

Ainsi, dans un premier temps, alors que l'appareil 1 est en service, notamment avec sa vis 10 entraînée en rotation sur elle-même autour de l'axe X-X par le moteur d'entraînement précité, la pomme P est admise vers le bas à l'intérieur de la goulotte 30. La pomme P descend à l'intérieur de cette goulotte, sous l'effet de son propre poids, comme représenté sur la figure 7.

Après avoir rejoint la partie haute 22 de l'enceinte 20 en passant sans blocage par l'intérieur de l'extrémité haute 11 de la vis 10, la pomme P roule et/ou glisse vers le bas contre la surface de guidage 12A, jusqu'à venir au contact de la face intérieure 22A de la partie haute 22 de l'enceinte, comme représenté sur les figures 9 à 11 : moyennant le maintien de l'entraînement en rotation de la vis 10, la pomme P se retrouve dans l'une des quatre positions de fragmentation, décrites plus haut, par exemple la position de fragmentation des figures 9 à 11. Alors que la pomme P est fermement bloquée par coopération entre sa moitié externe et deux des nervures 221 à 224, en l'occurrence les nervures 221 et 222 sur les figures 9 à 11, l'arête 121 de la vis 10 écrase la moitié interne de la pomme P, dans le sens de la rotation R de la vis.

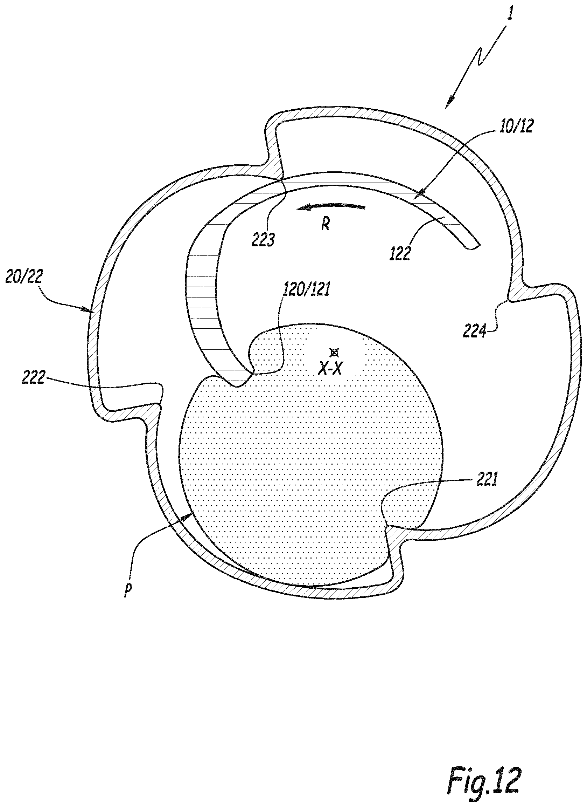

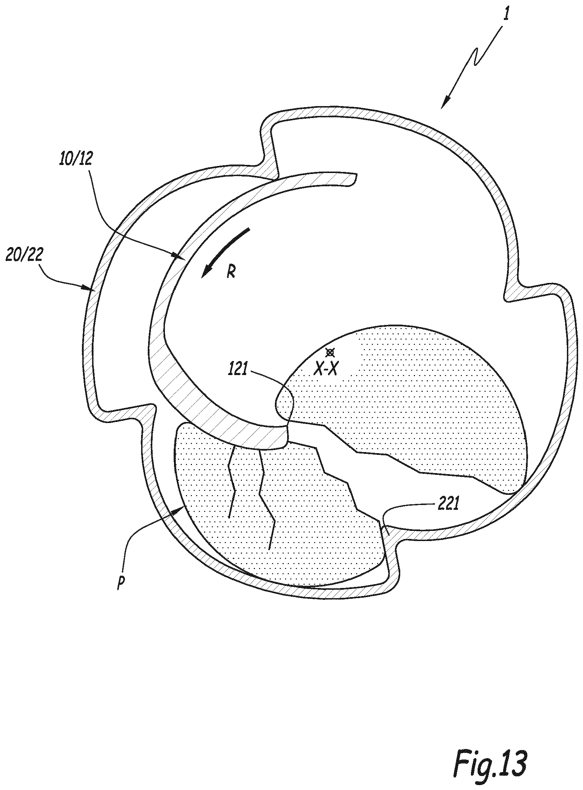

Eu égard à la nature de la matière constituant la pomme P, cette arête d'écrasage 121 tend à s'enfoncer dans la pomme P, tout en enfonçant également dans cette pomme la nervure 221, comme illustré à la figure 12. Puis, comme montré sur la figure 13, la pomme P se rompt, par amorce dans un plan diamétral entre ses deux moitiés précitées puis par déchirement de sa matière, en formant deux ou davantage de fragments qui présentent des formes irrégulières, liées à des arrachements et/ou des distorsions de la matière de la pomme. Le ou les fragments tournés à l'opposé de l'axe X-X se trouvent introduits dans la partie basse 23 de l'enceinte 20, via le passage délimité entre l'arête d'écrasage 121 et la surface de guidage 12A: ce ou ces fragments sont alors progressivement entraînés et pressés à l'interface entre les parties basses 13 et 23, coniques et complémentaires, de la vis 10 et de l'enceinte 20. On notera que les fragments de pomme sont particulièrement faciles à « attraper » par les filets 130 de la vis 10 lorsque la fragmentation par rupture de la pomme P est amorcée dans un plan sensiblement diamétral de la pomme, qui est incliné par rapport à la verticale, en prévoyant le décalage axial de la zone de contact C3 par rapport aux zones de contact C1 et C2.

Le jus résultant du pressage de ce ou ces fragments est récupéré à l'extérieur de l'enceinte 20 par les moyens de collecte 50, tandis que les résidus de pressage sont évacués dans l'axe X-X par l'extrémité basse 24 de l'enceinte.

Divers aménagements et variantes à l'appareil 1 décrit jusqu'ici sont par ailleurs envisageables. A titre d'exemple, plutôt que d'entraîner la vis 10 en rotation par son extrémité haute 11, cette vis peut être entraînée par son extrémité basse, en renonçant alors à évacuer les résidus de pressage dans l'axe X-X et, le cas échéant, en renonçant aussi à la forme conique pour la partie basse 13 de la vis.

## Revendications

1. Appareil électrique (1) de préparation de jus par pressage d'aliments, comportant :
- une goulotte (30) d'admission des aliments vers le bas, laquelle goulotte définit géométriquement une sphère inscrite (2) à même de passer librement par la goulotte ;
- une vis (10) de traitement des aliments en sortie de la goulotte (30), laquelle vis :
- est centrée sur un axe (X-X),
- est accouplée à un moteur électrique d'entraînement de la vis en rotation sur elle-même autour de l'axe (X-X),
- inclut une partie haute (12) qui est pourvue de moyens (120) de balayage de la sortie de la goulotte (30), adaptés pour agir sur les aliments sortant de la goulotte pour les fragmenter, et
- inclut une partie basse (13) qui est conçue pour entraîner vers le bas et presser les fragments d'aliment provenant de la partie haute de la vis ; et
- une enceinte (20) de réception de la vis (10), laquelle enceinte :
- est sensiblement centrée sur l'axe (X-X),
- inclut une partie haute (21), laquelle partie haute de l'enceinte est reliée à la sortie de la goulotte (30) pour recevoir les aliments sortant de la goulotte et entoure la partie haute (12) de la vis (10), et
- inclut une partie basse (23), laquelle partie basse de l'enceinte entoure la partie basse (13) de la vis (10) et est conçue pour séparer le jus des fragments d'aliment lorsque ces derniers sont pressés par la partie basse de la vis ;
**caractérisé en ce que** la partie haute (22) de l'enceinte (20) est intérieurement pourvue de moyens (220) de blocage des aliments, adaptés pour bloquer en rotation les aliments lorsque ces derniers sont au contact des moyens de balayage (120), de sorte que, en sortie de la goulotte (30), ladite sphère inscrite (2) est déplaçable à l'intérieur de cette partie haute de l'enceinte, jusqu'à une position de fragmentation, dans laquelle :
- par formation d'une première zone (C1) de contact entre la sphère inscrite (2) et les moyens de blocage (220), les moyens de blocage s'opposent au roulement de la sphère inscrite dans le sens de la rotation (R) de la vis (10) contre la face intérieure (22A) de la partie haute (22) de l'enceinte (20),
- par formation d'une deuxième zone (C2) de contact entre la sphère inscrite (2) et les moyens de blocage (220), les moyens de blocage s'opposent au roulement de la sphère inscrite dans le sens opposé à la rotation (R) de la vis (10) contre la face intérieure (22A) de la partie haute (22) de l'enceinte (20), cette deuxième zone de contact (C2) étant formée dans une moitié de la sphère inscrite (2), qui est tournée à l'opposé de l'axe (X-X) et qui est délimitée par un plan diamétral de la sphère inscrite, à la fois sensiblement parallèle à l'axe (X-X) et passant par la première zone de contact (C1), et
- par formation d'une troisième zone (C3) de contact entre la sphère inscrite (2) et les moyens de balayage (120), les moyens de balayage écrasent la sphère inscrite dans le sens de la rotation (R) de la vis (10), cette troisième zone de contact (C3) étant formée dans la moitié de la sphère inscrite, opposée à celle dans laquelle est formée la deuxième zone de contact (C2).

2. Appareil suivant la revendication 1, **caractérisé en ce que** la troisième zone de contact (C3) est située, dans la direction de l'axe (X-X), à un niveau qui est plus haut que celui des première et deuxième zones de contact (C1, C2).

3. Appareil suivant l'une des revendications 1 ou 2, **caractérisé en ce que** les moyens de blocage (220) comprennent, voire consistent en, des nervures (221, 222, 223, 224) en saillie de la face intérieure (22A) de la partie haute (22) de l'enceinte (20), dont une première nervure (221) et une deuxième nervure (222) d'entre elles coopèrent par contact avec la sphère inscrite (2) pour former respectivement la première zone de contact (C1) et la deuxième zone de contact (C2) lorsque la sphère inscrite est dans la position de fragmentation, ladite deuxième nervure précédant immédiatement ladite première nervure dans le sens de la rotation (R) de la vis (10).

4. Appareil suivant la revendication 3, **caractérisé par** quatre nervures (221, 222, 223, 224) qui sont régulièrement réparties autour de l'axe (X-X).

5. Appareil suivant l'une quelconque des revendications précédentes, **caractérisé en ce que** les moyens de blocage (220) sont également adaptés pour guider vers le bas les aliments qu'ils bloquent en rotation.

6. Appareil suivant la revendication 5, prise en combinaison avec l'une des revendications 3 ou 4, **caractérisé en ce que** les nervures (221, 222, 223, 224) sont conformées en portions d'hélice centrée sur l'axe (X-X), qui sont enroulées vers le bas dans le sens de la rotation (R) de la vis (10).

7. Appareil suivant l'une quelconque des revendications précédentes, **caractérisé en ce que** les moyens de blocage (220), notamment leurs nervures (221, 222, 223, 224), se prolongent dans la partie basse (23) de l'enceinte (20) pour bloquer en rotation les fragments d'aliment lorsque ces derniers sont pressés par la partie basse (13) de la vis (10).

8. Appareil suivant l'une quelconque des revendications précédentes, **caractérisé en ce que** la face intérieure (22A) de la partie haute (22) de l'enceinte (20) délimite une surface concave (22B), depuis laquelle les moyens de blocage (220) sont saillants et qui est torique de manière centrée sur l'axe (X-X).

9. Appareil suivant l'une quelconque des revendications précédentes, **caractérisé en ce que** les moyens de balayage (120) comprennent, voire consistent en, une arête (121) de la partie haute (12) de la vis (10), qui est conformée pour écraser les aliments.

10. Appareil suivant la revendication 9, **caractérisé en ce que** l'arête (121) des moyens de balayage (120) est tournée vers l'axe (X-X) et s'étend vers le bas en étant enroulée en hélice autour de l'axe (X-X).

11. Appareil suivant l'une quelconque des revendications précédentes, **caractérisé en ce que** la sortie de la goulotte (30), voire toute la goulotte (30), est intérieurement centrée sur l'axe (X-X).

12. Appareil suivant l'une quelconque des revendications précédentes, **caractérisé en ce qu'**une extrémité haute (11) de la partie haute (12) de la vis (10) forme un anneau, qui est centré sur l'axe (X-X), depuis lequel les moyens de balayage (120) s'étendent vers le bas, et par l'intérieur duquel la sortie de la goulotte (30) est reliée à la partie haute (22) de l'enceinte (20) de manière à laisser passer librement ladite sphère inscrite (2).

13. Appareil suivant l'une quelconque des revendications précédentes, caractérisé ce que la vis (10) est pourvue, à son extrémité haute, de moyens (110) de liaison au moteur électrique pour entraîner la vis en rotation.

14. Appareil suivant les revendications 12 et 13 prises ensemble, caractérisé ce que l'anneau formé par l'extrémité haute (11) de la vis (10) est pourvu des moyens de liaison (110).

15. Appareil suivant l'une des revendications 13 ou 14, caractérisé ce que les moyens de liaison (110) sont solidarisés de manière amovible à l'extrémité haute (11) de la vis (10).

## Patentansprüche

1. Elektrisches Gerät (1) zur Herstellung von Saft durch Pressen von Nahrungsmitteln, umfassend:
- einen Schacht (30) zur Aufnahme von Lebensmitteln nach unten, wobei der Schacht geometrisch eine einbeschriebene Kugel (2) begrenzt, die selbst frei durch den Schacht hindurchgeht;
- eine Schraube (10) zur Behandlung der Nahrungsmittel am Ausgangs des Schachtes (30), wobei die Schraube:
- auf eine Achse (X-X) zentriert ist,
- mit einem elektrischen Motor für den Antrieb der Schraube zur Drehung um sich selbst um die Achse (X-X) verbunden ist,
- ein oberes Teil (12) einschließt, das mit Mitteln (120) zum Überstreichen des Ausgangs des Schachtes (30) versehen ist, die geeignet sind, auf die Nahrungsmittel zu wirken, die den Schacht verlassen, um sie zu fragmentieren, und
- ein unteres Teil (13) eunschließt, das konzipiert ist, die vom oberen Teil der Schraube herkommenden Nahrungsmittelfragmente nach unten mitzunehmen und zu pressen; und
- eine Umhüllung (20) zur Aufnahme der Schraube (10), wobei die Umhüllung:
- im Wesentlichen auf die Achse (X-X) zentriert ist,
- ein oberes Teil (21) einschließt, wobei das obere Teil der Umhüllung an den Ausgang des Schachtes (30) angeschlossen ist, um die den Schacht verlassenden Nahrungsmittel aufzunehmen, und den oberen Teil (12) der Schraube (10) umgibt, und
- ein unteres Teil (23) einschließt, wobei das untere Teil der Umhüllung das untere Teil (13) der Schraube (10) umgibt und konzipiert ist, den Saft der Nahrungsmittelfragmente zu trennen, wenn Letztere von dem unteren Teil der Schraube gepresst werden;
**dadurch gekennzeichnet, dass** das obere Teil (22) der Umhüllung (20) innen mit Mitteln (220) zum Blockieren der Nahrungsmittel versehen ist, die ausgebildet sind, die Nahrungsmittel hinsichtlich der Drehung zu blockieren, wenn diese Letzteren in Kontakt mit den Überstreichmitteln (120) sind, derart, dass am Ausgang des Schachtes (30) die einbeschriebene Kugel (2) im Inneren dieses oberen Teils der Umhüllung bis zu einer Position der Fragmentierung bewegbar ist, in der:
- durch Bildung einer ersten Kontaktzone (C1) zwischen der einbeschriebenen Kugel und den Mitteln zum Blockieren (220) die Mittel zum Blockieren sich dem Rollen der einbeschriebenen Kugel in Richtung der Drehung (R) der Schraube (10) gegen die Innenfläche (22A) des oberen Teils (22) der Umhüllung (20) entgegenstellen,
- durch Bildung einer zweiten Kontaktzone (C2) zwischen der einbeschriebenen Kugel (2) und den Mitteln zum Blockieren (220) die Mittel zum Blockieren sich dem Rollen der einbeschriebenen Kugel in die der Drehung (R) der Schraube (10) entgegengesetzte Richtung gegen die Innenfläche (22A) des oberen Teils (22) der Umhüllung (20) entgegenstellen, wobei diese zweite Kontaktzone (C2) in einer Hälfte der einbeschriebenen Kugel (2) gebildet ist, die entgegengesetzt zur Achse (X-X) gerichtet ist und die durch eine diametrale Ebene der einbeschriebenen Kugel sowohl im Wesentlichen parallel zur Achse (X-X) als auch durch die erste Kontaktzone (C1) hindurchgehend begrenzt ist, und
- durch Bildung einer dritten Kontaktzone (C3) zwischen der einbeschriebenen Kugel (2) und den Überstreichmitteln (120) die Überstreichmittel die einbeschriebene Kugel in der Drehrichtung (R) der Schraube (10) zerdrücken, wobei diese dritte Kontaktzone in der Hälfte der einbeschriebenen Kugel gebildet wird, die derjenigen, in der die zweite Kontaktzone (C2) gebildet ist, entgegengesetzt ist.

2. Gerät nach Anspruch 1, **dadurch gekennzeichnet, dass** die dritte Kontaktzone (C3) in der Richtung der Achse (X-X) auf einer Höhe liegt, die höher als die der ersten und der zweiten Kontaktzone (C1, C2) ist.

3. Gerät nach einem der Ansprüche 1 oder 2, **dadurch gekennzeichnet, dass** die Mittel zum Blockieren (220) Rippen (221, 222, 223, 224), die aus der Innenfläche (22A) des oberen Teils (22) der Umhüllung (20) herausragen, umfassen oder sogar daraus bestehen, von denen eine erste Rippe (221) und eine zweite Rippe (222) durch Kontakt mit der einbeschriebenen Kugel (2) zusammenarbeiten, um jeweils die erste Kontaktzone (C1) und die zweite Kontaktzone (C2) zu bilden, wenn die einbeschriebene Kugel in der Position der Fragmentierung ist, wobei die zweite Rippe unmittelbar vor der ersten Rippe in Drehrichtung (R) der Schraube (10) liegt.

4. Gerät nach Anspruch (3), **gekennzeichnet durch** vier Rippen (221, 222, 223, 224), die regelmäßig um die Achse (X-X) verteilt sind.

5. Gerät nach einem beliebigen der vorhergehenden Ansprüche, **dadurch gekennzeichnet, dass** die Mittel zum Blockieren (220) auch geeignet sind, die Nahrungsmittel, die sie hinsichtlich der Drehung blockieren, nach unten zu leiten.

6. Gerät nach Anspruch 5 in Kombination mit einem der Ansprüche 3 oder 4, **dadurch gekennzeichnet, dass** die Rippen (221, 222, 223, 224) als auf die Achse (X-X) zentrierte Spiralbereiche ausgebildet sind, die nach unten in Drehrichtung (R) der Schraube (10) gedreht sind.

7. Gerät nach einem beliebigen der vorhergehenden Ansprüche, **dadurch gekennzeichnet, dass** die Mittel zum Blockieren (220), insbesondere ihre Rippen (221, 222, 223, 224), sich in den unteren Teil (23) der Umhüllung (20) verlängern, um die Nahrungsmittelfragmente zu blockieren, wenn diese Letzteren durch den unteren Teil (13) der Schraube (10) gepresst werden.

8. Gerät nach einem beliebigen der vorhergehenden Ansprüche, **dadurch gekennzeichnet, dass** die Innenfläche (22A) des oberen Teils (22) der Umhüllung (20) eine konkave Fläche (22B) begrenzt, von der die Mittel zum Blockieren (220) hervorspringen und die in auf die Achse (X-X) zentrierte Weise torisch ist.

9. Gerät nach einem beliebigen der vorhergehenden Ansprüche, **dadurch gekennzeichnet, dass** die Überstreichmittel (120) eine Kante (121) des oberen Teils (12) der Schraube (10) umfassen beziehungsweise darin bestehen, die ausgebildet ist, die Nahrungsmittel zu zerdrücken.

10. Gerät nach Anspruch 9, **dadurch gekennzeichnet, dass** die Kante (121) der Überstreichmittel (120) zur Achse (X-X) gerichtet ist und sich nach unten erstreckt, wobei sie spiralförmig um die Achse (X-X) gedreht ist.

11. Gerät nach einem beliebigen der vorhergehenden Ansprüche, **dadurch gekennzeichnet, dass** der Ausgang des Schachtes (30), sogar der gesamte Schacht (30), innen auf die Achse (X-X) zentriert ist.

12. Gerät nach einem beliebigen der vorhergehenden Ansprüche, **dadurch gekennzeichnet, dass** ein oberes Ende (11) des oberen Teils (12) der Schraube (10) einen Ring bildet, der auf die Achse (X-X) zentriert ist, von dem sich die Überstreichmittel (120) nach unten erstrecken und durch dessen Inneres der Ausgang des Schachts (30) mit dem oberen Teil (22) der Umhüllung (20) so verbunden ist, dass die einbeschriebene Kugel (2) frei hindurchgehen kann.

13. Gerät nach einem beliebigen der vorhergehenden Ansprüche, **dadurch gekennzeichnet, dass** die Schraube (10) an ihrem oberen Ende mit Mitteln (110) zur Verbindung mit dem elektrischen Motor versehen ist, um die Schraube zur Drehung anzutreiben.

14. Gerät nach den Ansprüchen 12 und 13 zusammengenommen, **dadurch gekennzeichnet, dass** der von dem oberen Ende (11) der Schraube (10) gebildete Ring mit den Mitteln (110) zur Verbindung versehen ist.

15. Gerät nach einem der Ansprüche 13 oder 14, **dadurch gekennzeichnet, dass** die Mittel (110) zur Verbindung in lösbarer Weise mit dem oberen Ende (11) der Schraube (10) verbunden sind.

## Claims

1. An electrical juice preparation appliance (1) for preparing juice by pressing food, comprising:
- a food introduction chute (30) for introducing food items in downward direction, the said chute geometrically defines an inscribed sphere (2) that is able to pass freely through the chute;
- a food processing screw (10) for processing the food items exiting out of the chute (30), the said screw;
- is centered on an axis (X-X);
- is coupled to an electric drive motor for driving the screw in rotation about itself around the axis (X-X);
- includes an upper part (12) which is provided with the sweep means (120) for sweeping the outlet of the chute (30) capable of acting on the food items exiting out of the chute in order to fragment them; and
- includes a lower part (13) which is designed to drive down towards the bottom and press the food fragments coming from the upper part of the screw; and
- a reception chamber (20) for receiving the screw (10), the said chamber:
- is substantially centered on the axis (X-X),
- includes an upper part (21), the said upper part of the chamber is connected to the outlet of the chute (30) for receiving the food items exiting out of the chute and surrounds and encloses the upper part (12) of the screw (10); and
- includes a lower part (23), the said lower part of the chamber surrounds and encloses the lower part (13) of the screw (10) and is designed for separating the juice from the food fragments when the latter are pressed by the lower part of the screw;
**characterised in that** the upper part (22) of the chamber (20) is internally provided with the food blocking means (220) for blocking the food, that are capable of blocking in rotation the food items when the latter are in contact with the sweep means (120), in such manner that, at the outlet of the chute (30), the said inscribed sphere (2) is movable within the interior of this upper part of the chamber, to as far as a fragmentation position, wherein:
- by formation of a first zone (C1) of contact between the inscribed sphere (2) and the blocking means (220), the blocking means counter and prevent the rolling of the inscribed sphere in the direction of rotation (R) of the screw (10) against the interior surface (22A) of the upper part (22) of the chamber (20);
- by formation of a second zone (C2) of contact between the inscribed sphere (2) and the blocking means (220), the blocking means counter and prevent the rolling of the inscribed sphere in the direction opposite to the direction of rotation (R) of the screw (10) against the interior surface (22A) of the upper part (22) of the chamber (20), this second zone of contact (C2) being formed in one half of the inscribed sphere (2) which is turned to be facing away from the axis (X-X) and which is delimited by a diametral plane of the inscribed sphere, that is both substantially parallel to the axis (X-X) and passing through the first zone of contact (C1); and
- by formation of a third zone (C3) of contact between the inscribed sphere (2) and the sweep means (120), the sweep means crush the inscribed sphere in the direction of rotation (R) of the screw (10), this third zone of contact (C3) being formed in the half of the inscribed sphere, opposite to the half in which is formed in the second zone of contact (C2).

2. An appliance according to claim 1, **characterised in that** the third zone of contact (C3) is situated, in the direction of the axis (X-X), at a level which is higher than that of the first and second zones of contact (C1, C2).

3. An appliance according to one of claims 1 or 2, **characterised in that** the blocking means (220) comprise, or even consist of, the ribs (221, 222, 223, 224) projecting out from the interior surface (22A) of the upper part (22) of the chamber (20), whereof a first rib (221) and a second rib (222) which cooperate therebetween by contact with the inscribed sphere (2) in order to form respectively the first zone of contact (C1) and the second zone of contact (C2) when the inscribed sphere is in the position of fragmentation, the said second rib immediately preceding the said first rib in the direction of rotation (R) the screw (10).

4. An appliance according to claim 3, **characterised by** four ribs (221, 222, 223, 224) which are uniformly distributed regularly around the axis (X-X).

5. An appliance according to any one of the preceding claims, **characterised in that** the blocking means (220) are also capable of guiding downwards towards the bottom the food items that they block rotation.

6. An appliance according to claim 5, taken in combination with one of claims 3 or 4, **characterised in that** the ribs (221, 222, 223, 224) are formed in portions of a helix centered on the axis (X-X), which are wound downwards in the direction of rotation (R) of the screw (10).

7. An appliance according to any one of the preceding claims, **characterised in that** the blocking means (220); in particular their ribs (221, 222, 223, 224) extend into the lower part (23) of the chamber (20) in order to block in rotation the food fragments when the latter are pressed by the lower part (13) of the screw (10).

8. An appliance according to any one of preceding claims, **characterised in that** the interior surface (22A) of the upper part (22) of the chamber (20) delimits a concave surface (22B), from which the blocking means (220) are projecting out and which is toroidal in a manner centered on the axis (X-X).

9. An appliance according to any one of the preceding claims, **characterised in that** the sweep means (120) comprise, or even consist of, a crushing edge (121) of the upper part (12) of the screw (10), which is formed so as to crush the food items.

10. An appliance according to claim 9, **characterised in that** the crushing edge (121) of the sweep means (120) is turned towards the axis (X-X) and extends downward towards the bottom while being helically wound about the axis (X-X).

11. An appliance according to any one of the preceding claims, **characterised in that** the outlet of the chute (30), or even the entire chute (30) is internally centered on the axis (X-X).

12. An appliance according to any one of the preceding claims, **characterised in that** a top end (11) of the upper part (12) of the screw (10) forms a ring, which is centered on the axis (X-X), from which the sweep means (120) extend downward towards the bottom and within the interior of which the outlet of the chute (30) is connected to the upper part (22) of the chamber (20) in a manner so as to let pass freely the said inscribed sphere (2).

13. An appliance according to any one of the preceding claims, **characterised in that** the screw (10) is provided, at its top end, with the connecting means (110) for connecting to the electric drive motor for driving the screw in rotation.

14. An appliance according to claims 12 and 13 taken together, **characterised in that** the ring formed by the top end (11) of the screw (10) is provided with connecting means (110).

15. An appliance according to one of claims 13 or 14, **characterised in that** the connecting means (110) are secured in a detachable manner to the top end (11) of the screw (10).
